(19) Europäisches Patentamt
European Patent Office
Office européen des brevets

(11) EP 0 682 614 B1

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(21) Anmeldenummer: 92913687.7

(22) Anmeldetag: 20.06.1992

(51) Int. Cl.$^6$: **B60T 8/88**

(86) Internationale Anmeldenummer:
**PCT/EP92/01392**

(87) Internationale Veröffentlichungsnummer:
**WO 93/01074 (21.01.1993 Gazette 1993/03)**

(54) **SCHALTUNGSANORDNUNG ZUR ERKENNUNG VON RADSENSORDEFEKTEN**

CIRCUIT FOR DETECTING DEFECTS IN WHEEL SENSORS

CIRCUIT DE RECONNAISSANCE DE DEFAUTS DE CAPTEURS DE ROUES

(84) Benannte Vertragsstaaten:
**DE FR GB**

(30) Priorität: **06.07.1991 DE 4122484**

(43) Veröffentlichungstag der Anmeldung:
**22.11.1995 Patentblatt 1995/47**

(73) Patentinhaber: **ITT Automotive Europe GmbH 60488 Frankfurt am Main (DE)**

(72) Erfinder:
• **FENNEL, Helmut**
**D-6232 Bad Soden (DE)**

• **LATARNIK, Michael**
**D-6382 Friedrichsdorf 4 (DE)**
• **BATISTIC, Ivica**
**D-6000 Frankfurt/Main 60 (DE)**

(74) Vertreter: **Blum, Klaus-Dieter, Dipl.-Ing.**
**c/o ITT Automotive Europe GmbH**
**Guerickestrasse 7**
**60486 Frankfurt (DE)**

(56) Entgegenhaltungen:
**EP-A- 0 075 932          EP-A- 0 369 179**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf eine für Kraftfahrzeug-Bremsanlagen mit elektronischer Blockierschutz- und/oder Antriebsschlupfregelung vorgesehene Schaltungsanordnung zur Erkennung von Radsensordefekten, mit Schaltkreisen, welche die Sensorsignale aufbereiten und auswerten, die Geschwindigkeit, Verzögerung und Beschleunigung der einzelnen Räder ermitteln und diese Werte untereinander sowie mit vorgegebenen Schwellwerten vergleichen und die beim Erkennen von Signalen oder Signalkombinationen, die für einen Sensordefekt typisch sind, die Regelung zumindest zeitweise abschalten. Eine Schaltungsanordnung dieser Art ist z.B. aus EP-A-0 369 179 bekannt.

Das Überwachen der einzelnen Komponenten und der Funktionsfähigkeit einer elektronisch geregelten Bremsanlage ist von großer Bedeutung. Bei einer Feststellung von Defekten läßt sich nämlich durch Abschaltung der Regelung die konventionelle Funktion der Bremsen sicherstellen. Da eine große Vielfalt von Fehlern und Fehlerarten auftreten können, werden in der Praxis die Regelungssysteme durch unterschiedliche Maßnahmen überwacht. Beispielsweise ist es bekannt, regelmäßig Testpulse zu erzeugen und die Reaktion der Komponenten auf diese Pulse zu beobachten. Eine andere Überwachungsmethode besteht darin, die Signalverarbeitung in dem elektronischen Regler des Systems in getrennten Schaltkreisen parallel durchzuführen und die auf diese Weise erzeugten Ausgangssignale auf Übereinstimmung zu überwachen. Zahlreiche Fehler lassen sich mit Hilfe sogenannter Plausibilitätskriterien erkennen. Diese Methode der Fehlererkennung beruht darauf, daß bestimmte Meßwerte oder Signalkombinationen bei intaktem System physikalisch nicht möglich sind und daher, falls sie dennoch auftreten, auf einen Fehler hinweisen. In vielen Fällen bereitet es jedoch Schwierigkeiten, durch Fehlfunktion verursachte Signale von korrekten Regelsignalen zu unterscheiden.

Manche Fehlerarten sind durch alle bekannten Überwachungsmethoden nicht, nicht zuverlässig oder nicht schnell genug zu erkennen. Zu diesem Problemkreis gehört die Überwachung der Radsensoren. Fehlerhafte Signale treten z.B. bei einem zu großen Luftspalt, bei einem Lösen oder bei falscher Montage der Zahnscheibe, bei teilweise oder gänzlich fehlenden Pulsgeber-Zähnen usw. auf. Beispielsweise bereitet es dann Schwierigkeiten zu erkennen, ob das Ausbleiben von Sensorsignalen beim Anfahren des Fahrzeugs auf einen Stillstand des Rades oder auf ein Fehlen des Sensorrades zurückgeht. Probleme dieser Art sind unter dem Begriff "Anfahrerkennung" in Fachkreisen bekannt.

Aus der europäischen Patentschrift EP 0 075 932 B1 ist bereits ein Antiblockiersystem mit Sicherheitsfunktion bekannt, bei dem bestimmte Signalpaare detektiert und ein Fehler erkannt wird, wenn eine Signalkombination auftritt, die während eines fehlerfreien Betriebs nicht möglich ist. Bestimmte Sensorfehler sind auf diese Weise nicht feststellbar, weil die durch den Defekt hervorgerufenen Signale auch in bestimmten Regelsituationen auftreten können.

Der Erfindung liegt nun die Aufgabe zugrunde, eine Schaltungsanordnung zu entwickeln, die in der Praxis vorkommende Sensorfehler unterschiedlicher Art sehr schnell und zuverlässig erkennt und in diesen Fällen durch Abschalten der Regelung die konventionelle Bremsenfunktion sicherstellt.

Es hat sich gezeigt, daß diese Aufgabe mit einer Schaltungsanordnung der eingangs genannten Art zu lösen ist, deren Besonderheit darin besteht, daß bei einem unter einer sogenannten Überdrehschwelle liegenden Beschleunigungsmeßwert an einem, an zwei oder an drei Rädern und bei einem unter einer unteren Geschwindigkeitsschwelle liegenden Geschwindigkeitsmeßwert an dem bzw. an mindestens einem der restlichen Räder der Regler abgeschaltet oder stillgelegt wird, sobald ein Radgeschwindigkeitsmeßwert eine obere Geschwindigkeitsschwelle überschreitet.

Mit dieser Schaltungsanordnung wird u.a. beim Anfahren des Fahrzeugs und unter der Überdrehschwelle liegender Beschleunigung ein Sensordefekt sehr schnell erkannt.

Nach einer vorteilhaften Ausführungsart einer solchen Schaltungsanordnung wird, wenn eine deutliche Verzögerung, d.h. eine unter einem vorgegebenen Verzögerungsgrenzwert liegende Radverzögerung auftritt, eine Zeitüberwachung mit einer vorgegebenen verkürzten Zeitdauer, die im Bereich zwischen 20 und 60 s oder bei etwa 30 s liegen kann, in Lauf gesetzt.

Zur Erkennung von Sensordefekten, z.B. beim Anfahren mit Überdrehen, ist eine Schaltungsanordnung nach der Erfindung derart ausgelegt, daß bei einem über der Überdrehschwelle liegenden Beschleunigungsmeßwert an bis zu drei Rädern und bei einem unter einer unteren Geschwindigkeitsschwelle liegenden Geschwindigkeitsmeßwert an mindestens einem der restlichen Räder eine Zeitüberwachung in Lauf gesetzt wird, sobald ein Geschwindigkeitsmeßwert eine obere Geschwindigkeitsschwelle überschreitet, und daß nach Ablauf einer durch die Zeitüberwachung vorgegebenen Zeitdauer der Regler abgeschaltet wird.

Nach einer weiteren vorteilhaften Ausführungsart der Erfindung ist die Zeitüberwachung derart ausgebildet, daß sie die Zeitspannen, in der ein Geschwindigkeitsmeßwert die obere Geschwindigkeitsschwelle überschreitet, akkumulierend erfaßt, wobei die Zeitüberwachung, wenn der Geschwindigkeitsmeßwert die untere Geschwindigkeitsschwelle unterschreitet, in die Anfangslage zurückgestellt wird. Es wird also das Zeitglied der Zeitüberwachung in den Phasen, in denen nach dem Überschreiten der oberen Geschwindigkeitsschwelle der Geschwindigkeitsmeßwert wieder unter diese Schwelle absinkt, angehalten. Diese Phasen werden folglich nicht berücksichtigt. Die vorgegebene Zeitdauer der Zeitüberwachung liegt zweckmäßigerweise im Bereich zwischen 1 und 3 Minuten, vorzugsweise bei etwa 2 Minuten.

Ferner ist es nach einer Ausführungsart der Erfindung vorgesehen, bei einem über der Überdrehschwelle liegenden Beschleunigungsmeßwert an mindestens einem Rad und einem unter der unteren Geschwindigkeitsschwelle liegenden Geschwindigkeitsmeßwert die Zeitüberwachung in Lauf zu setzen, sobald ein Geschwindigkeitsmeßwert die obere Geschwindigkeitsschwelle überschreitet, und bei konstantem oder annähernd konstantem Drehverhalten des schnellsten Rades die Zeitdauer der Zeitüberwachung in Abhängigkeit von dem Beschleunigungsverhalten dieses Rades um einen vorgegebenen Wert zu verkürzen. Die Zeitdauer der Zeitüberwachung wird, wenn eine Änderung der Geschwindigkeit des schnellsten Rades in der vorgegebenen Zeiteinheit unter ca. 0,1 bis 0,2 g gemessen wird, um einen Wert im Bereich zwischen 10 und 50 s, z.B. um 20 s, verkürzt. Wenn nach dem Überschreiten der oberen Geschwindigkeitsschwelle eine Beschleunigung dieses Rades auftritt, die über einen vorgegebenen Wert von z.B. $\pm 1$ g liegt, wird der Beginn der Zeitspanne zur Erkennung des konstanten Raddrehverhaltens auf den Zeitpunkt des Auftretens dieser Beschleunigung verschoben.

Schließlich besteht eine vorteilhafte Ausführungsart der Erfindung noch darin, daß nach dem Überschreiten der oberen Geschwindigkeitsschwelle der Regler für die Dauer des Ablaufs der Zeitüberwachung auf ein Regelschema, bei dem die Regelung von der Verzögerung und Beschleunigung der einzelnen Räder abhängig ist, nicht jedoch von den Schlupf-Meßwerten, umgeschaltet wird. Die Regelung bleibt also in dieser Phase von einer fehlerhaften Schlupfmessung, bedingt z.B. durch einen Sensordefekt, unbeeinflußt.

Weitere Merkmale, Vorteile und Anwendungsmöglichkeiten der Erfindung gehen aus der folgenden Beschreibung anhand von Diagrammen und eines Ausführungsbeispiels der Erfindung hervor.

Es zeigen

Fig. 1 bis 6     im Diagramm den zeitlichen Verlauf der Radbeschleunigung sowie des schnellsten und des langsamsten Rades in verschiedenen Situationen und

Fig. 7     im Blockschaltbild die wichtigsten Komponenten einer Schaltungsanordnung nach der Erfindung.

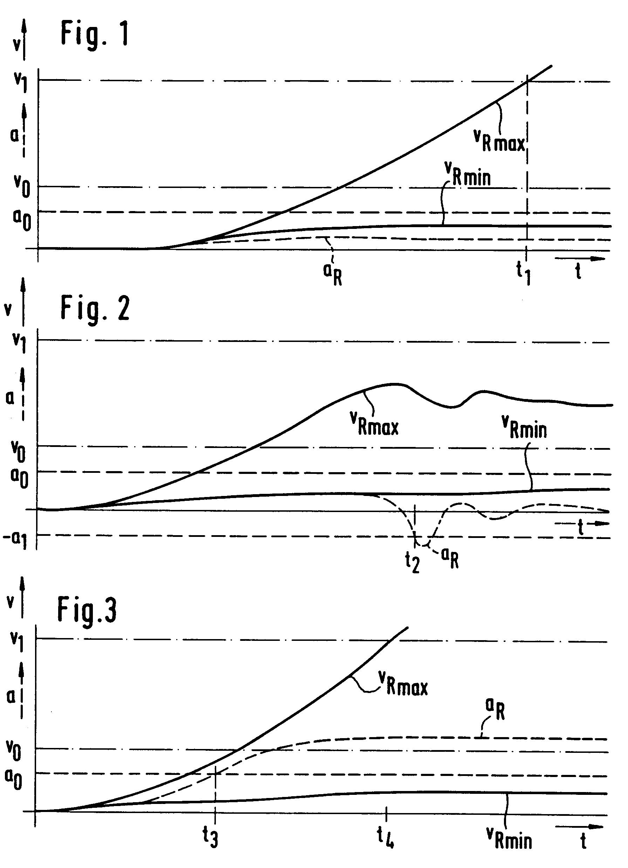

Der in Fig. 1 dargestellte Kurvenverlauf bezieht sich auf einen Anfahrvorgang "ohne Überdrehen". Dargestellt sind der Geschwindigkeitsverlauf des schnellsten Rades $v_{Rmax}$, die Geschwindigkeit des langsamsten Rades $v_{Rmin}$, die Beschleunigung des schnellsten Rades $a_R$ sowie Geschwindigkeits- und Beschleunigungsschwellen. Mit "$a_0$" ist eine sogenannte Überdrehschwelle, mit "$v_0$" ist eine untere Geschwindigkeitsschwelle, und mit "$v_1$" ist eine obere Geschwindigkeitsschwelle bezeichnet. In einem Ausführungsbeispiel der Erfindung wurde eine untere Geschwindigkeitsschwelle $v_0$ = 5 km/h und eine obere Geschwindigkeitsschwelle $v_1$ = 20 km/h gewählt. Ein typischer Wert für die Überdrehschwelle wäre $a_0$ = 0,3 g, wobei "g" für die Erdbeschleunigungskonstante steht.

In dem Beispiel bzw. bei dem Anfahrvorgang, auf den sich Fig. 1 bezieht, wird eine bestimmte Radbeschleunigung $a_R$ festgestellt, die jedoch unter der Beschleunigungsschwelle $a_0$ bleibt. Die Geschwindigkeitskennlinie $v_{Rmin}$ eines Rades erreicht nicht die untere Geschwindigkeitsschwelle $v_0$. Die Kennlinie $a_R$ zeigt die Beschleunigung des schnellsten Rades. In diesem Fall wird zum Zeitpunkt $t_1$, an dem die Geschwindigkeit des schnellsten Rades $v_{Rmax}$ die obere Geschwindigkeitsschwelle $v_1$ erreicht, das Vorliegen eines Sensordefektes erkannt und deshalb der Blokkierschutz- und Antriebsschlupfregler abgeschaltet oder auf andere Weise eine Regelung verhindert. Bei einem intakten System oder intakten Radsensoren ist nämlich ein solch unterschiedliches Raddrehverhalten nicht möglich.

In Fig. 2 ist zusätzlich zu den bereits erläuteren Schwellen $a_0$, $v_0$, $v_1$ noch eine untere Beschleunigungsschwelle "$-a_1$" eingetragen. Beim Anfahren eines Fahrzeugs tritt nämlich z.B. beim Hochschalten des von Hand oder automatisch betätigten Getriebes typischerweise eine "deutliche", d.h. die Schwelle $-a_1$ zum Zeitpunkt $t_2$ unterschreitende Radverzögerung auf. Dies wird als ein "Überdrehen im Stand" gedeutet und löst eine verkürzte Zeitüberwachung aus. Fig. 2 zeigt den typischen Radverlauf $v_{max}$, $v_{Rmin}$ und $a_R$ in einer solchen, durch Umschalten, durch Überfahren eines Eisfleckes oder dergl. hervorgerufenen Situation.

Fig. 3 bezieht sich auf ein Anfahren "mit Überdrehen". An einem, an zwei oder an drei Rädern überschreitet die Beschleunigung $a_R$ zum Zeitpunkt $t_3$ die Überdrehschwelle $a_0$.

Gleichzeitig bleibt die Geschwindigkeit $v_{Rmin}$ mindestens eines Rades unter der unteren Geschwindigkeitsschwelle Vo, die hier mit 5 km/h festgelegt wurde. Ein solcher Signalverlauf könnte zurückzuführen sein

1. auf einen Anfahrvorgang mit bis zu drei fehlerhaften (kein Signal abgebenden) Raddrehzahlsensoren, oder
2. auf ein Überdrehen im Stand auf einer Fahrbahn mit niedrigem Reibbeiwert.

Zum Zeitpunkt $t_4$, an dem das schnellste Rad, dessen Geschwindigkeit mit $v_{Rmax}$ bezeichnet ist, die obere Geschwindigkeitsschwelle $v_1$ überschreitet, wird daher erfindungsgemäß eine Zeitüberwachung in Lauf gesetzt. Nach Ablauf einer vorgegebenen Zeitdauer, die z.B. 2 Minuten beträgt und in Abhängigkeit von bestimmten Kriterien verkürzt werden kann, wird, weil das Vorhandensein eines Radsensordefektes erkannt wurde, die Regelung abgeschaltet.

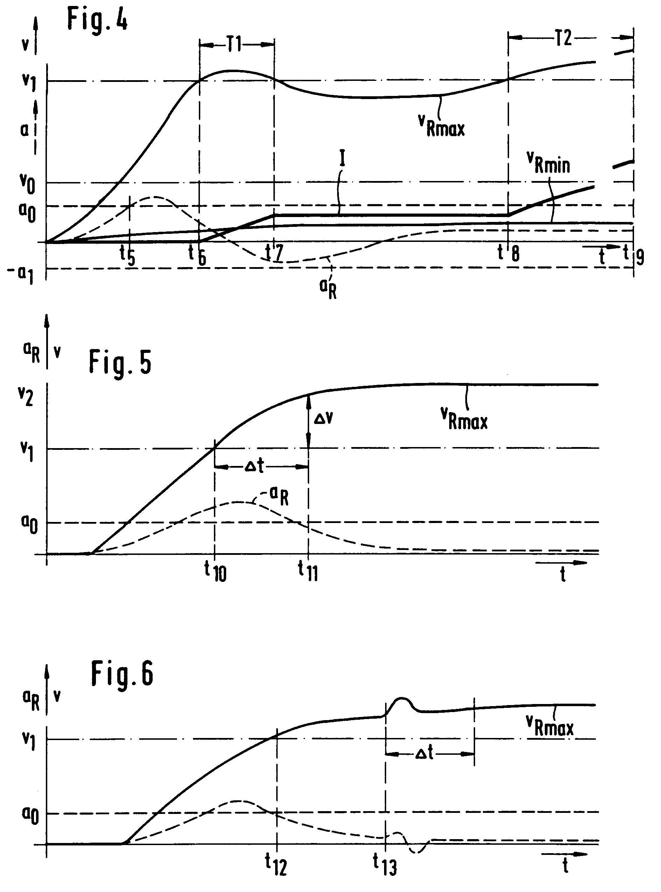

In der Anfahrsituation nach Fig. 4, in der zur Erläuterung der Zeitüberwachung der Zeitmaßstab im Vergleich zu den Fig. 1 bis 3 geändert wurde, überschreiten wiederum, wie in dem Beispiel nach Fig. 3, die Radbeschleunigung $a_R$ zum Zeitpunkt $t_5$ die Überdrehschwelle $a_0$ und die Geschwindigkeit $v_{Rmax}$ des schnellsten Rades zum Zeitpunkt $t_6$ die obere Geschwindigkeitsschwelle $v_1$. Die Zeitüberwachung wird folglich zum Zeitpunkt $t_6$ in Gang gesetzt. Der Inhalt I eines entsprechenden, zum Zeitpunkt $t_6$ gestarteten Akkumulators oder Zeitzählers ist ebenfalls in Fig. 4 dargestellt. Der Zähler wird angehalten bzw. der Zählerinhalt bleibt konstant, wenn, wie im Beispiel nach Fig. 4, der Geschwindigkeitsmeßwert $v_{Rmax}$ zum Zeitpunkt $t_7$ vorübergehend unter die obere Geschwindigkeitsschwelle $v_1$ sinkt und diese Schwelle zum Zeitpunkt $t_8$ wieder überschreitet. Diese "Zeitunterbrechung" zwischen $t_7$ und $t_8$ verlängert folglich die Zeitdauer bis zur Abschaltung des Reglers nach der erstmaligen Fehlererkennung zum Zeitpunkt $t_6$.

Zum Zeitpunkt $t_9$ endet die vorgegebene Zeitdauer T, die im dargestellten Beispiel zwischen 1 Minute und 2 Minuten, zuzüglich der Zeitdifferenz zwischen $t_7$ und $t_8$, liegt. Die Zeitdauer T setzt sich in diesem Fall aus den Zeitspannen T1 + T2 zusammen.

Die Diagramme nach den Fig. 5 und 6 beziehen sich ebenfalls auf Situationen, in denen der Geschwindigkeitsverlauf $v_{Rmax}$ des schnellsten Rades auf ein Überdrehen dieses Rades hinweist. Die Beschleunigung $a_R$ liegt in beiden Fällen über der Beschleunigungsschwelle an $a_0$. Um die zum Zeitpunkt des Überschreitens der oberen Geschwindigkeitsschwelle $v_1$ einsetzende Überwachungszeit T, die im vorliegenden Beispiel zunächst auf einen Wert zwischen 1 Minute und 2 Minuten eingestellt war, in einem solchen Fall erheblich reduzieren zu können, wird mit einem relativ groben Raster die Änderung der Geschwindigkeit $\Delta v/\Delta t$ nach dem Überschreiten der Geschwindigkeitsschwelle $v_1$ gemessen. Für $\Delta t$ wird z.B. eine Zeitspanne in der Größenordnung von 1 bis 3 s, hier etwa 2 s, gewählt. Wird eine Änderung $\Delta v/\Delta t$ gemessen, die kleiner als der vorgegebene Wert von z.B. 0,1 bis 0,2 g ist, deutet dies auf (annähernd) konstantes Drehverhalten dieses Rades hin. In diesem Fall, auf den sich Figur 5 bezieht, wird die Überwachungszeit T um einen bestimmten Betrag in der Größenordnung zwischen 10 und 50 s, z.B. um etwa 20 s, verkürzt. Diese geringe Geschwindigkeitsänderung bzw. Verzögerung von weniger als 0,1 oder 0,2 g innerhalb des Beobachtungsintervalls t wird als Erkennung einer "stationären oder quasi stationären Fahrt" interpretiert.

Zusätzlich zu dieser Messung der Geschwindigkeitsänderung im groben Zeitraster bzw. innerhalb des Beobachtungszeitintervalls t wird noch die Beschleunigung dv/dt gemessen. Hierzu wird die Geschwindigkeitsänderung innerhalb eines Arbeitstaktes, der z.B. zwischen 5 und 10 ms liegen kann, ermittelt. Tritt während dieser stationären oder quasi stationären Fahrt ein Beschleunigungssprung auf, wie dies zum Zeitpunkt $t_{13}$ in dem Beispiel nach Fig. 6 der Fall ist, wird der Beginn des Beobachtungszeitintervalls $\Delta t$ von dem Zeitpunkt $t_{12}$ nach Fig. 6, bei dem die Geschwindigkeitsschwelle $v_1$ überschritten wurde, auf den Zeitpunkt $t_{13}$ verschoben. Solche kurzzeitigen starken Beschleunigungen können z.B. auf eine Straßenstörung, auf eine mit Glatteis bedeckte Straßenfläche und auf ähnlichen Erscheinungen zurückgehen.

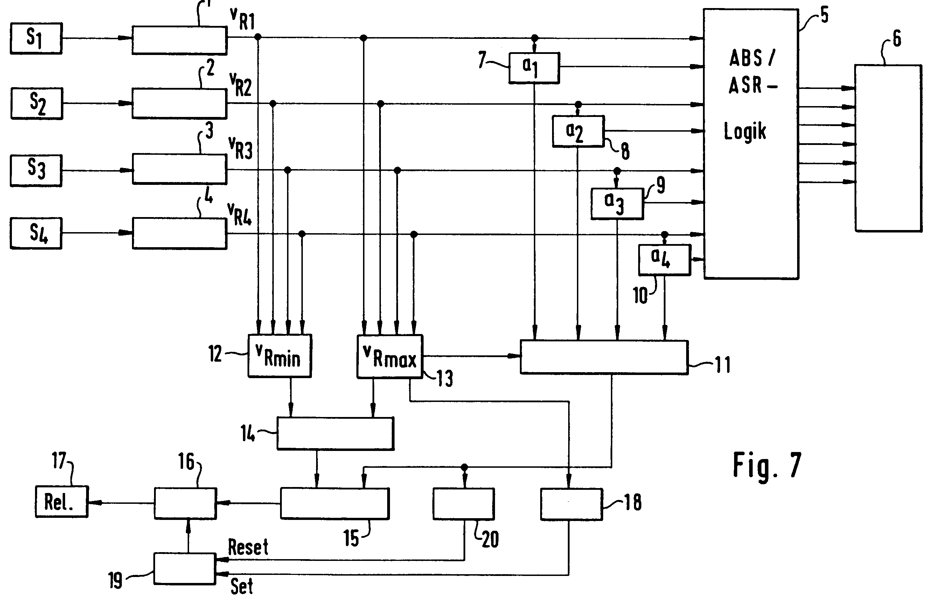

Fig. 7 veranschaulicht die Zusammenschaltung der wichtigsten Komponenten einer Schaltungsanordnung nach der Erfindung. Aus den Ausgangssignalen von Radsensoren $S_1$ bis $S_4$ wird zunächst in Auswerteschaltkreisen 1 bis 4 ein die Radgeschwindigkeit darstellendes Signal $v_{R1}$ bis $v_{R4}$ erzeugt. Aus diesen Signalen werden dann in bekannter Weise mit Hilfe einer ABS/ASR-Logik 5 Ventilsteuersignale erzeugt und zur Bremsdruckmodulation an einen Ventilblock 6 angelegt. Schaltkreise 7 bis 10, mit denen durch die Differentiation der Geschwindigkeitssignale die Beschleunigungssignale $a_1$ bis $a_4$ gewonnen werden, sind ebenfalls in Fig. 7 dargestellt.

Diese Beschleunigungssignale werden sowohl von der ABS/ASR-Regellogik 5 als auch zur Erkennung von Sensordefekten benötigt. Die Beschleunigungssignale $a_1$ bis $a_4$ werden deshalb auch einer Zeitüberwachung 11, die die vorgegebenen Zeiten in Abhängigkeit von der jeweiligen Situation bis zum Abschalten des Reglers im Fehlerfalle vorgibt, zugeleitet.

Außerdem enthält die erfindungsgemäße Schaltungsanordnung nach Fig. 7 Schaltkreise 12,13 zur Ermittlung der momentan geringsten (12) und höchsten (13) Radgeschwindigkeit $v_{Rmin}$ bzw. $v_{Rmax}$. In einem Komparator 14 wird die höchste Geschwindigkeit $v_{Rmax}$ mit der geringsten $v_{Rmin}$ verglichen und danach in Abhängigkeit von dem Ausgangssignal der Zeitüberwachung 11 in einem Schaltkreis 15 die Zeitdauer T vorgegeben, die von dem Überschreiten der oberen Geschwindigkeitsschwelle $v_1$ bis zum Abschalten der Regelung verstreichen wird. Das Ausgangssignal des Schaltkreises 15 wird daher über ein Zeitglied 16 zu einem Hauptrelais 17 geleitet, das schließlich beim Erkennen eines Sensordefektes die Regelung abschaltet.

Das Ausgangssignal des Schaltkreises 13, der die momentan höchste Radgeschwindigkeit $v_{Rmax}$ auswählt, wird außerdem einem Tiefpaß 18 mit einer vorgegebenen, im Sekundenbereich liegenden Zeitkonstanten zugeleitet. Geht das Geschwindigkeitssignal $v_{Rmax}$, nämlich das Ausgangssignal des Schaltkreises 13, in einen stationären oder quasi stationären Bereich über, wird mit Hilfe des Tiefpasses 18 ein Zeitreduzier-Schaltkreis 19 gesetzt, der wiederum das Zeitglied 16 ansteuert und die in dieser Situation vorgegebene Zeitdauer bis zum Abschalten der Regelung vorgibt. Das Zurücksetzen "reset" des Zeitreduzierkreises 19 wird mit Hilfe eines zweiten Tiefpasses 20 gesteuert, der das Ausgangssignal des Zeitüberwachungskreises 11 auswertet. Die Zeitkonstante des Tiefpasses 20 liegt im Millisekundenbereich, z.B. zwischen 5 und 10 Millisekunden.

Das Ausgangssignal der Zeitüberwachung 11, die die Radbeschleunigung auswertet, wird in dem Schaltkreis 15 mit dem Ausgangssignal des Vergleichers 14 verglichen und somit ebenfalls zur Ansteuerung des Zeitgliedes 16 verwertet.

**Patentansprüche**

1. Schaltungsanordnung zur Erkennung von Radsensordefekten, für Kraftfahrzeug-Bremsanlagen mit elektronischer Blockierschutz- und/oder Antriebsschlupfregelung, mit Schaltkreisen, welche die Sensorsignale aufbereiten und auswerten, die Geschwindigkeit, Verzögerung und Beschleunigung der einzelnen Räder ermitteln und diese Werte untereinander sowie mit vorgegebenen Schwellwerten vergleichen und die beim Erkennen von Signalen oder Signalkombinationen, die für einen Sensordefekt typisch sind, die Regelung zumindest zeitweise abschalten, dadurch **gekennzeichnet**, daß bei einem unter einer sogenannten Überdrehschwelle ($a_0$) liegenden Beschleunigungsmeßwert ($a_R$) an einem, an zwei oder an drei Rädern und bei einem unter einer unteren Geschwindigkeitsschwelle ($v_0$) liegenden Geschwindigkeitsmeßwert ($v_{Rmin}$) an dem bzw. an mindestens einem der restlichen Räder der Regler abgeschaltet oder stillgelegt wird, sobald ein Radgeschwindigkeitsmeßwert ($V_{Rmax}$) eine obere Geschwindigkeitsschwelle ($v_1$) überschreitet.

2. Schaltungsanordnung nach Anspruch 1, dadurch **gekennzeichnet**, daß bei einem unter der Überdrehschwelle ($a_0$) liegenden Beschleunigungsmeßwert ($a_R$) an einem, an zwei oder an drei Rädern und bei einem unter einer unteren Geschwindigkeitsschwelle ($v_0$) liegenden Geschwindigkeitsmeßwert ($v_{Rmin}$) an dem bzw. mindestens an einem der restlichen Räder, wenn eine deutliche Verzögerung, d.h. eine unter einem vorgegebenen Verzögerungsgrenzwert ($-a_1$) liegende Radverzögerung auftritt ($a_R$), eine Zeitüberwachung mit einer vorgegebenen verkürzten Zeitdauer in Lauf gesetzt wird.

3. Schaltungsanordnung nach Anspruch 2, dadurch **gekennzeichnet**, daß die verkürzte Zeitdauer im Bereich zwischen 20 und 60 Sekunden, vorzugsweise bei etwa 30 s liegt.

4. Schaltungsanordnung nach einem oder mehreren der Ansprüche 1 bis 3, dadurch **gekennzeichnet**, daß bei einem über der Überdrehschwelle ($a_0$) liegenden Beschleunigungsmeßwert ($a_{Rn}$) an einem, an zwei oder an drei Rädern und bei einem unter einer unteren Geschwindigkeitsschwelle ($v_0$) liegenden Geschwindigkeitsmeßwert ($v_{Rmin}$) an dem bzw. an mindestens einem der restlichen Räder eine Zeitüberwachung in Lauf gesetzt wird, sobald ($t_4$) ein Geschwindigkeitsmeßwert ($v_{Rmax}$) eine obere Geschwindigkeitsschwelle ($v_1$) überschreitet, und daß nach Ablauf einer durch die Zeitüberwachung vorgegebenen Zeitdauer (T,T1+T2) der Regler abgeschaltet wird.

5. Schaltungsanordnung zur Erkennung von Radsensordefekten, mit Schaltkreisen, welche die Sensorsignale aufbereiten und auswerten, die Geschwindigkeit, Verzögerung und Beschleunigung der einzelnen Räder ermitteln und diese Werte untereinander sowie mit schon vorgegebenen Schwellwerten vergleichen und die beim Erkennen von Signalen oder Signalkombinationen, die für einen Sensordefekt typisch sind, die Regelung zumindest zeitweise abschalten, dadurch **gekennzeichnet**, daß bei einem über der Überdrehschwelle ($a_0$) liegenden Beschleunigungsmeßwert ($a_R$) an einem, an zwei oder an drei Rädern und bei einem unter einer unteren Geschwindigkeitsschwelle ($v_0$) liegenden Geschwindigkeitsmeßwert ($v_{Rmin}$) an dem bzw. an mindestens einem der restlichen Räder eine Zeitüberwachung in Lauf gesetzt wird, sobald ($t_4$) ein Geschwindigkeitsmeßwert ($v_{Rmax}$) eine obere Geschwindigkeitsschwelle ($v_1$) überschreitet, und daß nach Ablauf einer durch die Zeitüberwachung vorgegebenen Zeitdauer ( T=T1+T2 ) der Regler abgeschaltet wird.

6. Schaltungsanordnung nach Anspruch 4 oder 5, dadurch **gekennzeichnet**, daß die Zeitüberwachung die Zeitspannen (T1,T2), in der ein Geschwindigkeitsmeßwert ($v_{Rmax}$) die obere Geschwindigkeitsschwelle ($v_1$) überschreitet, akkumulierend erfaßt, und daß die Zeitüberwachung, wenn der Geschwindigkeitsmeßwert ($v_{Rmax}$) die untere Geschwindigkeitsschwelle ($v_0$) unterschreitet, in die Ausgangslage zurückgestellt wird.

7. Schaltungsanordnung nach einem oder mehreren der Ansprüche 4 bis 6, dadurch **gekennzeichnet**, daß die vorgegebene Zeitdauer (T,T1+T2) der Zeitüberwachung in einem Bereich zwischen 1 und 3 Minuten, vorzugsweise bei etwa 2 Minuten, liegt.

8. Schaltungsanordnung nach einem oder mehreren der Ansprüche 4 bis 7, dadurch **gekennzeichnet**, daß bei einem über der Überdrehschwelle ($a_0$) liegenden Beschleunigungsmeßwert ($a_{Rn}$) an einem, an zwei oder an drei Rädern und einem unter der unteren Geschwindigkeitsschwelle ($v_0$) liegenden Geschwindigkeitsmeßwert ($v_{Rmin}$) die Zeitüberwachung in Lauf gesetzt wird, sobald ein Geschwindigkeitsmeßwert ($v_{Rmax}$) die obere Geschwindigkeitsschwelle ($v_1$) überschreitet, und daß bei konstantem oder annähernd konstantem Drehverhalten des schnellsten Rades ($v_{Rmax}$) die Zeitdauer der Zeitüberwachung in Abhängigkeit von dem Beschleunigungsverhalten dieses Rades um einen vorgegebenen Wert verkürzt wird.

**9.** Schaltungsanordnung nach Anspruch 8, dadurch **gekennzeichnet**, daß zum Erkennen des (annähernd) konstanten Raddrehverhaltens die Änderung der Geschwindigkeit ($\Delta v$) des schnellsten Rades ($v_{Rmax}$) nach dem Überschreiten der oberen Geschwindigkeitsschwelle ($v_1$) in vorgegebenen Zeitspannen bzw. Beobachtungsintervallen ($\Delta t$) von beispielsweise einigen Sekunden erfaßt wird.

**10.** Schaltungsanordnung nach Anspruch 8 oder 9, dadurch **gekennzeichnet**, daß die Zeitdauer (T) der Zeitüberwachung, wenn eine Änderung ($\Delta v/\Delta t$) der Geschwindigkeit ($v_{Rmax}$) des schnellsten Rades nach dem Überschreiten der oberen Geschwindigkeitsschwelle ($v_1$) unter ca. 0,1 bis 0,2 g gemessen wird, um einen Wert im Bereich zwischen 10 und 50 s, vorzugsweise um etwa 20 s, verkürzt wird.

**11.** Schaltungsanordnung nach einem oder mehreren der Ansprüche 8 bis 10, dadurch **gekennzeichnet**, daß der Beginn des Beobachtungsintervalls ( t) zur Erkennung des konstanten Raddrehverhaltens beim Auftreten einer Beschleunigung, die über einen vorgegebenen Grenzwert von z.B. $\pm 1$ g liegt, auf den Zeitpunkt ($t_{13}$) des Auftretens dieser Beschleunigung verschoben wird.

**12.** Schaltungsanordnung nach einem oder mehreren der Ansprüche 4 bis 11, dadurch **gekennzeichnet**, daß nach dem Überschreiten der oberen Geschwindigkeitsschwelle ($v_1$) der Regler für die Dauer (T) der Zeitüberwachung auf Regelung in Abhängigkeit von der Verzögerung und Beschleunigung der einzelnen Räder, jedoch unabhängig von Schlupf-Meßwerten, umgeschaltet wird.

**Claims**

**1.** A circuit configuration for detecting wheel sensor malfunctions intended for automotive vehicle brake systems with electronic anti-lock control and/or traction slip control, including circuits which process and assess the sensor signals, which ascertain speed, deceleration and acceleration of the individual wheels and compare these values with one another as well as with predefined limit values, the circuits disconnecting the control at least temporarily once signals or combinations of signals typical of a sensor malfunction are detected, **characterized** in that the control unit will be disconnected or disabled in the presence of a measured acceleration value ($a_R$) at one, two or three wheels which is below a so-termed overspeed threshold ($a_0$) and in the presence of a measured speed value ($v_{Rmin}$) at the remaining wheel or at least one of the remaining wheels which is below a bottom speed threshold ($v_0$), as soon as a measured wheel speed value ($V_{Rmax}$) exceeds a top speed threshold ($v_1$).

**2.** A circuit configuration as claimed in claim 1, **characterized** in that a time monitoring function with a predetermined shortened duration will be initiated in the presence of a measured acceleration value ($a_R$) at one, two or three wheels which is below the overspeed threshold ($a_0$) and in the presence of a measured speed value ($v_{Rmin}$) at the remaining wheel or at least one of the remaining wheels which is below a bottom speed threshold ($v_0$), when a remarkable deceleration occurs, that means when a wheel deceleration ($a_R$) occurs which is below a predetermined deceleration limit value ($-a_1$).

**3.** A circuit configuration as claimed in claim 2, **characterized** in that the shortened duration is in the range between 20 and 60 seconds, preferably amounts to 30 seconds roughly.

**4.** A circuit configuration as claimed in any one or more of the claims 1 to 3, **characterized** in that in the presence of a measured acceleration value ($a_{Rn}$) at one, two or three wheels which is above the overspeed threshold ($a_0$) and in the presence of a measured speed value ($v_{Rmin}$) at the remaining wheel or at least one of the remaining wheels which is below a bottom speed threshold ($v_0$), a time monitoring function will be initiated as soon as (at time $t_4$) a measured speed value ($v_{Rmax}$) exceeds a top speed threshold ($v_1$), and in that the control unit is disconnected when the period of time (T, T1 + T2) predetermined by the time monitoring function has lapsed.

**5.** A circuit configuration for detecting wheel sensor malfunctions including circuits which process and assess the sensor signals, which ascertain speed, deceleration and acceleration of the individual wheels and compare these values with one another as well as with predefined limit values, the circuits disconnecting the control at least temporarily once signals or combinations of signals typical of a sensor malfunction are detected, **characterized** in that a time monitoring function will be initiated in the presence of a measured acceleration value ($a_R$) at one, two or three wheels which is above the overspeed threshold ($a_0$) and in the presence of a measured speed value ($v_{Rmin}$) at the remaining wheel or at least one of the remaining wheels which is below a bottom speed threshold ($v_0$) as soon as (at time $t_4$) a measured wheel speed value ($V_{Rmax}$) exceeds a top speed threshold ($v_1$), and in that the control unit is disconnected upon lapse of a time period ( T=T1+T2 ) predetermined by the time monitoring function.

**6.** A circuit configuration as claimed in claim 4 or 5,

**characterized** in that the time monitoring function accumulates the time periods (T1, T2) in which a measured speed value ($v_{Rmax}$) exceeds the top speed threshold ($v_1$), and in that the time monitoring function is reset to the initial position once the measured speed value ($v_{Rmax}$) falls short of the bottom speed threshold ($v_0$).

7. A circuit configuration as claimed in any one or more of the claims 4 to 6,
   **characterized** in that the predetermined time period (T, T1+T2) of the time monitoring function is in the range between 1 and 3 minutes, preferably amounts to roughly 2 minutes.

8. A circuit configuration as claimed in any one or more of the claims 4 to 7,
   **characterized** in that in the presence of a measured acceleration value ($a_{Rn}$) at one, two or three wheels which is above the overspeed threshold ($a_0$) and in the presence of a measured speed value ($v_{Rmin}$) which is below the bottom speed threshold ($v_0$), the time monitoring function is initiated as soon as a measured speed value ($v_{Rmax}$) exceeds the top speed threshold ($v_1$), and in that in the event of a constant or approximately constant rotational behaviour of the fastest wheel ($v_{Rmax}$) the duration of the time monitoring function is shortened by a predetermined value in dependence on the acceleration behaviour of this wheel.

9. A circuit configuration as claimed in claim 8,
   **characterized** in that, for the detection of the (approximately) constant wheel rotational behaviour, the variation of the speed ($\Delta v$) of the fastest wheel ($v_{Rmax}$) after the exceeding of the top speed threshold ($v_1$) is ascertained in predetermined time periods or monitoring intervals ($\Delta t$) of some seconds, for example.

10. A circuit configuration as claimed in claim 8 or 9,
    **characterized** in that once a variation ($\Delta v/\Delta t$) of the speed ($v_{Rmax}$) of the fastest wheel after the exceeding of the top speed threshold ($v_1$) is measured to be below roughly 0.1 to 0.2 g, the time period (T) of the time monitoring function will be shortened by a value in the range between 10 and 50 seconds, preferably by roughly 20 seconds.

11. A circuit configuration as claimed in any one or more of the claims 8 to 10,
    **characterized** in that once an acceleration occurs which is in excess of a predetermined limit value of e.g. ± 1 g, the commencement of the monitoring interval ($\Delta t$) for detecting the constant wheel rotational behaviour will be shifted to time ($t_{13}$) when this acceleration occurs.

12. A circuit configuration as claimed in any one or more of the claims 4 to 11,
    **characterized** in that after the top speed threshold ($v_1$) has been exceeded, the control unit will be switched over for the duration (T) of the time monitoring function to a control in response to the deceleration and acceleration of the individual wheels, yet irrespective of measured slip values.

**Revendications**

1. Agencement de circuit de reconnaissance des défauts de capteur de roue, pour système de freinage pour véhicule automobile à régulation électronique antiblocage et/ou du glissement de traction, comprenant des circuits qui mettent en forme et exploitent les signaux de capteur, déterminent la vitesse, la décélération et l'accélération des différentes roues et comparent ces valeurs les unes aux autres, ainsi qu'à des valeurs de seuil préfixées, et mettent la régulation à l'arrêt au moins par périodes lorsque sont reconnus des signaux ou combinaisons de signaux qui sont typiques d'un défaut de capteur, caractérisé en ce que, lorsqu'une valeur de mesure d'accélération ($a_R$) sur une roue, sur deux roues ou sur trois roues est inférieure à ce qu'il est convenu d'appeler un seuil de patinage ($a_0$) et lorsqu'une valeur mesurée de vitesse ($v_{Rmin}$) sur la roue restante ou sur au moins l'une des roues restantes est inférieure à un seuil inférieur de vitesse ($v_0$), le régulateur est mis à l'arrêt ou au repos dès qu'une valeur masurée de vitesse de roue ($v_{Rmax}$) franchit un seuil supérieur de vitesse ($v_1$).

2. Agencement de circuit selon la revendication 1, caractérisé en ce que, lorsqu'il se présente ($a_R$) une décélération sensible, c'est-à-dire une décélération de roue inférieure à une valeur limite de décélération (-$a_1$) préfixée, des moyens de surveillance de durée sont mis en marche avec une durée réduite préfixée.

3. Agencement de circuit selon la revendication 2, caractérisé en ce que la durée réduite est comprise entre 20 et 60 secondes, de préférence égale à environ 30 s.

4. Agencement de circuit selon une ou plusieurs des revendications 1 à 3, caractérisé en ce que, lorsqu'une valeur de mesure d'accélération ($a_R$) sur jusqu'à trois roues est supérieure au seuil de patinage ($a_0$) et lorsqu'une valeur mesurée de vitesse ($v_{Rmin}$) sur la roue restante ou sur au moins l'une des roues restantes est inférieure à un seuil inférieur de vitesse ($v_0$), des moyens de surveillance de durée sont mis en marche dès que ($t_4$) une valeur mesurée de vitesse ($v_{Rmax}$) franchit un seuil supérieur de vitesse ($v_1$) et en ce qu'une fois écoulée une durée (T, $T_1 + T_2$) préfixée à l'aide des moyens de surveillance de durée, le régulateur est mis à l'arrêt.

5. Agencement de circuit de reconnaissance des défauts de capteur de roue, prévu pour des systèmes de freinage pour véhicule automobile à régulation électronique antiblocage et/ou du glissement de traction, qui comprend des circuits qui mettent en forme et exploitent les signaux de capteur, déterminent la vitesse, la décélération et l'accélération des différentes roues et comparent ces valeurs les unes aux autres, ainsi qu'à des valeurs de seuil préfixées, et mettent la régulation à l'arrêt au moins par périodes lorsque sont reconnus des signaux ou combinaisons de signaux qui sont typiques d'un défaut de capteur, caractérisé en ce que, lorsqu'une valeur de mesure d'accélération ($a_R$) sur une roue, sur deux roues ou sur trois roues est supérieure au seuil de patinage ($a_0$) et lorsqu'une valeur mesurée de vitesse ($v_{Rmin}$) sur la roue restante ou sur au moins l'une des roues restantes est inférieure à un seuil inférieur de vitesse ($v_0$), des moyens de surveillance de durée sont mis en marche dès que ($t_4$) une valeur mesurée de vitesse ($v_{Rmax}$) franchit un seuil supérieur de vitesse ($v_1$) et en ce qu'une fois écoulée une durée ($T = T_1 + T_2$) préfixée à l'aide des moyens de surveillance de durée, le régulateur est mis à l'arrêt.

6. Agencement de circuit selon la revendication 4 ou 5, caractérisé en ce que les moyens de surveillance de temps sont conçus d'une façon telle qu'ils détectent, en les cumulant, les intervalles de temps ($T_1$, $T_2$) pendant lesquels une valeur mesurée de vitesse ($v_{Rmax}$) dépasse le seuil supérieur de vitesses ($v_1$), et en ce que, lorsque la valeur mesurée de vitesse ($v_{Rmax}$) franchit le seuil inférieur de vitesse ($v_0$), les moyens de surveillance de durée sont rappelés dans la position initiale.

7. Agencement de circuit selon une ou plusieurs des revendications 4 à 6, caractérisé en ce que la durée préfixée ($T$, $T_1 + T_2$) des moyens de surveillance de durée est comprise entre 1 et 3 minutes, de préférence égale à environ 2 minutes.

8. Agencement de circuit selon une ou plusieurs des revendications 4 à 7, caractérisé en ce que, lorsqu'une valeur de mesure d'accélération ($a_R$) sur au moins une roue est supérieure au seuil de patinage ($a_0$) et lorsqu'une valeur mesurée de vitesse ($v_{Rmin}$) est inférieure au seuil inférieur de vitesse ($v_0$), les moyens de surveillance de durée sont mis en marche dès qu'une valeur mesurée de vitesse ($V_{Rmax}$) franchit le seuil supérieur de vitesse ($v_1$) et en ce que, dans le cas d'un comportement constant ou approximativement constant de la roue la plus rapide ($v_{Rmax}$) en rotation, la durée des moyens de surveillance de durée est réduite d'une valeur préfixée en fonction du comportement de cette roue en accélération.

9. Agencement de circuit selon la revendication 8, caractérisé en ce que, pour la reconnaissance du comportement (approximativement) constant de rotation de la roue, la variation ($v$) de la vitesse ($vRmax$) de la roue la plus rapide après le franchissement du seuil supérieur de vitesse ($v1$) vers le haut est détectée dans des périodes de temps ou intervalles d'observation ($t$) préfixés, de par exemple quelques secondes.

10. Agencement de circuit selon la revendication 8 ou 9, caractérisé en ce que la durée ($T$) des moyens de surveillance de durée est réduite d'une valeur comprise entre 10 et 50 s, par exemple de préférence d'environ 20 s, lorsqu'une variation ($\Delta v/\Delta t$) de la vitesse ($vRmax$) de la roue la plus rapide est mesurée au-dessous d'environ 0,1 à 0,2 g après le franchissement du seuil supérieur de vitesse ($v_1$).

11. Agencement de circuit selon une ou plusieurs des revendications 8 à 10, caractérisé en ce que, lorsqu'il se présente une accélération qui est supérieure à une valeur limite préfixée de par exemple ± 1g, le début de l'intervalle d'observation ($\Delta t$) prévu pour la reconnaissance du comportement constant de la roue en rotation est déplacé jusqu'à l'instant ($t_{13}$) de l'apparition de cette accélération.

12. Agencement de circuit selon l'une des revendications 4 à 11, caractérisé en ce qu'après le franchissement du seuil supérieur de vitesses ($v_1$), le régulateur est commuté, pour la durée ($T$) des moyens de surveillance de durée, dans un mode de régulation en fonction de la décélération et de l'accélération des différentes roues, mais d'une manière indépendante de valeurs mesurées de glissement.

Fig. 1

Fig. 2

Fig.3

## Fig.4

## Fig.5

## Fig.6

Fig. 7